# DEMANDE DE BREVET EUROPEEN

(11) **EP 4 378 638 A2**
(43) Date de publication de la demande: **05.06.2024**
(21) Numéro de dépôt: 24171738.8
(22) Date de dépôt: 26.04.2019
(51) Int. Cl.: B25J 11/00

(54) **PROCÉDÉ DE COMMANDE D'UNE PLURALITÉ D'EFFECTEURS D'UN ROBOT**

(30) Priorité: 04.05.2018 FR 1853868
(62) Demande divisionnaire de: 19734847.7
(71) Demandeur: Spoon, 75015 Paris (FR)
(72) Inventeur: MONCEAUX, Jérôme, 75013 Paris (FR); HERVIER, Thibault, 94300 Vincennes (FR); MASURELLE, Aymeric, 75018 Paris (FR)
(74) Mandataire: IP Trust

(57) **Abrégé**

La présente invention concerne un procédé de commande d'une pluralité d'effecteurs (41 à 43) d'un robot par une pluralité de primitives constituées par des fonctions codées paramétrables
∘ lesdites primitives étant activées conditionnellement par des actions sélectionnées par un système de sélection d'actions
le procédé repose sur l'association, à chaque étape, des objets codés avec une séquence de caractères correspondant à leur description sémantique, comprenant :
i. une description sémantique desdits objets codés stockés dans la mémoire, composée d'une chaîne de caractères représentant une fonction de perception du robot et d'une autre chaîne de caractères représentant un objet perçu
ii. une description sémantique desdites primitives, composée d'une chaîne de caractères représentant une action possible du robot et d'une autre chaîne de caractères optionnelle représentant les paramètres optionnels de cette action
iii. une description sémantique desdites règles, composée de la combinaison d'une chaîne de caractères représentant le contexte associé et d'une autre chaîne de caractères représentant l'action associée.

L'invention concerne aussi un robot commandé selon ce procédé.

## Description

### Domaine de l'invention

La présente invention concerne le domaine des robots communicants. Plus précisément, elle concerne la gestion des ressources dudit robot pour commander un fonctionnement du robot communicant simulant une intelligence empathique leur permettant d'interagir avec un ou plusieurs humains par des actions qui ne sont pas uniquement esclaves (le terme « robot » ayant été imaginé en 1920 par le tchèque Karel Čapek s'inspirant du mot « robota » signifiant « esclave » dans les langues slaves).

Un tel robot peut prendre la forme d'un robot humanoïde, d'une voiture autonome ou plus simplement d'un équipement présentant une interface communicante permettant une interaction bidirectionnelle avec un ou plusieurs humains, par des messages multimodaux (tactiles, visuels ou sonores) émis et reçus par le robot.

Dans l'article « Measuring empathy for human and robot hand pain using electroencephalography » de Yutaka Suzuki, Lisa Galli, Ayaka Ikeda, Shoji Itakura & Michiteru Kitazaki paru dans « Scientific Reports 5, Article number: 15924 (2015) », les auteurs exposent le fonctionnement du cerveau humain, plus précisément sa réponse empathique, lorsqu'il perçoit un robot dans une situation évoquant une forme émotionnelle, par exemple de la douleur. Les auteurs de cette étude présentent à des volontaires soit la photographie d'une main humaine soit celle d'une main robotique, chacune dans une situation évoquant une douleur ou non (sur l'image présentée aux personnes participant à l'étude, une paire de ciseaux ouverte est affichée, pouvant ainsi potentiellement couper le doigt de la main affichée sur l'image).

Traditionnellement univoque, la relation entre le robot et l'humain devient réciproque. Certains roboticiens sont tentés de présenter les robots comme des « émorobots » (ayant des émotions, un "cœur"), ce qui est déjà le cas au Japon avec le robot Pepper (nom commercial) ou en France avec le robot Nao (nom commercial). Alors que l'empathie artificielle est toujours une simulation, les fabricants de robots sont tentés de nous présenter des machines qui seraient capables d'avoir de vraies émotions.

### Etat de la technique

Afin de répondre à ce besoin, on a proposé le brevet européen délivré sous le numéro EP1486300 B1 décrivant un système de commande de comportement pour un robot qui fonctionne de façon autonome, comportant :
- une pluralité de sections de description de comportement pour décrire les mouvements d'un corps de machine dudit robot ;
- une section de reconnaissance d'environnement extérieur pour reconnaître un environnement extérieur dudit corps de machine ;
- une section de gestion d'état interne pour gérer un état interne dudit robot en réponse à l'environnement extérieur reconnu et/ou un résultat de l'exécution d'un comportement ; et
- une section d'évaluation de comportement pour évaluer l'exécution de comportements décrits dans lesdites sections de description de comportement en réponse à l'environnement extérieur et/ou à l'environnement interne.

La section de gestion d'état interne gère les émotions, chacune d'elles étant un indice de l'état interne dans une structure hiérarchique présentant une pluralité de couches, et utilise les émotions en une couche d'émotions primaires nécessaires pour une préservation individuelle et une autre couche d'émotions secondaires qui varient selon l'excès/le manque d'émotions primaires, et en outre divise les émotions primaires en couches comprenant une couche réfléchissante innée ou physiologique et une couche associée en fonction des dimensions.

On connaît aussi le brevet européen délivré sous le numéro EP1494210 décrivant un système de communication vocale avec une fonction pour avoir une conversation avec un partenaire de conversation, comprenant :
- un moyen de reconnaissance vocale pour reconnaître la voix du partenaire de conversation ;
- un moyen de commande de conversation pour commander la conversation avec le partenaire de conversation sur la base d'un résultat de reconnaissance du moyen de reconnaissance vocale ;
- un moyen de reconnaissance d'image pour reconnaître un visage du partenaire de conversation ; et
- un moyen de commande de recherche pour rechercher l'existence du partenaire de conversation sur la base de l'un des résultats ou des deux résultats que sont un résultat de reconnaissance du moyen de reconnaissance d'image et un résultat de reconnaissance du moyen de reconnaissance vocale,

Le moyen de commande de conversation poursuit la conversation lorsque le contenu vocal du partenaire de conversation obtenu en tant que résultat de reconnaissance du moyen de reconnaissance vocale est identique au contenu de réponse attendu même si la recherche du moyen de commande de recherche échoue.

### Inconvénients de l'art antérieur

Les solutions de l'art antérieur dissocient les ressources techniques destinées aux traitements du langage d'une part, et d'autre part les ressources techniques destinées aux traitements de reconnaissance de l'environnement du robot par des caméras et éventuellement d'autres capteurs et la commande des mouvements du robot.

De ce fait, les solutions de l'art antérieur ne permettent pas de réaliser des tâches d'apprentissage enrichies, mélangeant des entrées et sorties sémantiques et des données perçues et actuations.

En particulier, le brevet EP1486300 ne prévoit pas la prise en compte de la dimension verbale de l'interaction entre l'humain et le robot, et ainsi ne permet pas de procéder, par exemple, à un apprentissage naturel du robot lors de l'interaction avec l'humain.

Le brevet EP1494210 quant à lui ne prévoit qu'une interaction verbale entre l'humain et le robot pour commander des conversations artificielles.

La juxtaposition de l'enseignement de ces deux documents ne permettrait pas d'obtenir une solution satisfaisante car les deux solutions n'utilisent pas les mêmes grammaires techniques et ne permettent pas de mélanger les informations verbales et les informations perçues par les capteurs du robot dans un même ensemble sémantique.

Par ailleurs, l'état interne du robot correspondant à une « émotion » se traduit exclusivement par la sélection d'une action choisie parmi une collection d'actions associées à des émotions, ce qui limite considérablement les possibilités d'intelligence empathique en temps réel avec l'humain.

Les solutions de l'art antérieur conduisent à des apparences émotionnelles figées, de manière faiblement réactive par rapport à l'attitude de l'humain en interaction avec le robot. La crédibilité de l'apparence émotionnelle est médiocre du fait de l'absence de modifications en temps réel, ce qui empêche de réduire la charge cognitive de l'humain en interaction avec le robot.

### Solution apportée par l'invention

Le but de la présente invention est de répondre à ces inconvénients en proposant, selon l'acceptation la plus générale de l'invention, un procédé de commande d'une pluralité d'effecteurs d'un robot par une pluralité de primitives constituées par des fonctions codées paramétrables
∘ lesdites primitives étant activées conditionnellement par des actions sélectionnées par un système de sélection d'actions
∘ ledit système de sélection d'actions :
   * comportant une mémoire déclarative dans laquelle est enregistrée une bibliothèque dynamique de règles, chacune associant un contexte à une action
   * reposant sur une liste d'objets codés stockés dans une mémoire déterminant la représentation du monde par ledit robot
∘ lesdits objets codés stockés dans la mémoire étant calculés par des fonctions de perception
∘ lesdites fonctions de perception étant calculées à partir des signaux fournis par des capteurs dudit robot
caractérisé en ce que le procédé repose sur l'association, à chaque étape, des objets codés avec une séquence de caractères correspondant à leur description sémantique, avec en particulier
i. une description sémantique desdits objets codés stockés dans la mémoire, composée d'une chaîne de caractères représentant une fonction de perception du robot et d'une autre chaîne de caractères représentant un objet perçu
ii. une description sémantique desdites primitives, composée d'une chaîne de caractères représentant une action possible du robot et d'une autre chaîne de caractères optionnelle représentant les paramètres optionnels de cette action
iii. une description sémantique desdites règles (102 à 106), composée de la combinaison d'une chaîne de caractères représentant le contexte associé et d'une autre chaîne de caractères représentant l'action associée.

Avantageusement, ledit système de sélection d'action classifie les règles en fonction de la proximité du contexte de chacune de ces règles avec le contexte calculé à partir du contenu des objets contenus dans la mémoire et sélectionne les actions associées aux règles pertinentes avec le contexte.

Selon des variantes de mise en oeuvre :
- le procédé comporte en outre des étapes d'enregistrement de nouvelles règles associées à une nouvelle action, par l'intermédiaire d'un module d'apprentissage, reposant par exemple sur de la reconnaissance vocale, de la reconnaissance de gestes ou du mimétisme ;
- le procédé comporte une étape de calcul, pour chaque règle, d'un paramètre IS qui est recalculé après chaque réalisation de l'action associée, l'ordre de priorité des actions sélectionnées par le système de sélection d'action étant déterminé en fonction de la valeur du paramètre IS associé à chacune des actions ;
- le procédé comporte en outre des étapes de communication avec d'autres robots par l'intermédiaire d'un module de communication et d'un serveur partagé, la mémoire déclarative du système de sélection d'actions du robot étant périodiquement synchronisée avec le contenu dudit serveur partagé.
- l'activation des primitives par les actions est filtrée par un gestionnaire de ressources garantissant la compatibilité des commandes envoyées aux effecteurs ;
- le procédé comporte en outre :
   i. des étapes de mise à jour constante, en tâche de fond de variables d'état interne VEIx, en fonction de l'évolution des objets enregistrés dans ladite mémoire (80).
   ii. des étapes de paramétrage desdites primitives d'action (131 à 134), desdites fonctions de perception (72 à 75) et dudit module de sélection d'actions (100) en fonction des valeurs desdites variables d'état interne VEIx.

L'invention concerne aussi un robot comportant une pluralité d'effecteurs commandés par un contrôleur exécutant un procédé conforme à l'invention.

### Description détaillée d'un exemple non limitatif de l'invention

La présente invention sera mieux comprise à la lecture de la description détaillée d'un exemple non limitatif de l'invention qui suit, se référant aux dessins annexés où :
- la figure 1 représente une architecture matérielle de l'invention
- la figure 2 représente une architecture fonctionnelle de l'invention

### Architecture matérielle

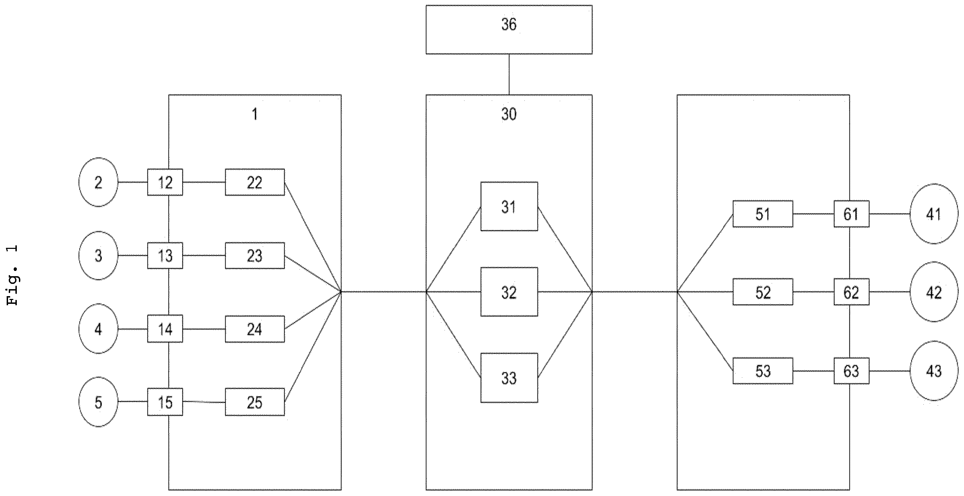

Le robot, selon l'exemple de réalisation décrit en figure 1, comporte des circuits d'interface de communication (1) avec des capteurs (2 à 5) par exemple :
- un microphone
- un réseau de microphone pour la localisation dans l'espace de la source sonore
- une caméra RGB
- une caméra thermique
- une caméra de profondeur
- un capteur tactile
- une dalle tactile d'un écran
- des capteurs de retour d'effort
- des capteurs thermiques
- des capteurs de contact
- un lecteur radio-fréquence
- etc

Chaque capteur (2 à 5) est associé à un circuit pilote physique (12 à 15) « driver », intégré dans le capteur ou prévu sur le circuit d'interface de communication (1).

Le circuit d'interface de communication (1) réunit les circuits de prétraitement (22 à 25) des signaux fournis par les capteurs (2 à 5) pour transmettre les informations au calculateur principal (30) ou à des calculateurs dédiés (31 à 33). Certains circuits de prétraitement (22 à 25) peuvent être constitués de circuits spécialisés, par exemple des circuits d'analyse d'image ou des circuits de reconnaissance vocale.

Les calculateurs dédiés (31 à 33) reçoivent les signaux de certains capteurs (2 à 5) ainsi que des commandes provenant du calculateur principal (30) pour calculer des instructions qui sont transmises à des circuits de prétraitement (51 à 53) pour le calcul des paramètres d'action d'un effecteur (41 à 43). Ces paramètres sont exploités par des circuits d'interface (61 à 63) pour fournir aux effecteurs (41 à 43) les signaux de commande, par exemple sous forme de signaux électriques modulés en largeur d'impulsion PWM.

Le calculateur principal (30) est associé par ailleurs à un module de communication (36) pour l'échange de données avec des ressources externes, par exemple l'Internet.

Les effecteurs (41 à 43) sont par exemple constitués par :
- des moteurs
- une articulation motorisée
- des haut-parleurs
- des écrans d'affichage
- des leds
- des avertisseurs sonores
- des diffuseurs d'odeur
- des actionneurs pneumatiques
- des circuits de télécommunications avec des équipements extérieurs, par exemple un serveur de paiement électronique ou un système domotique.

### Architecture fonctionnelle

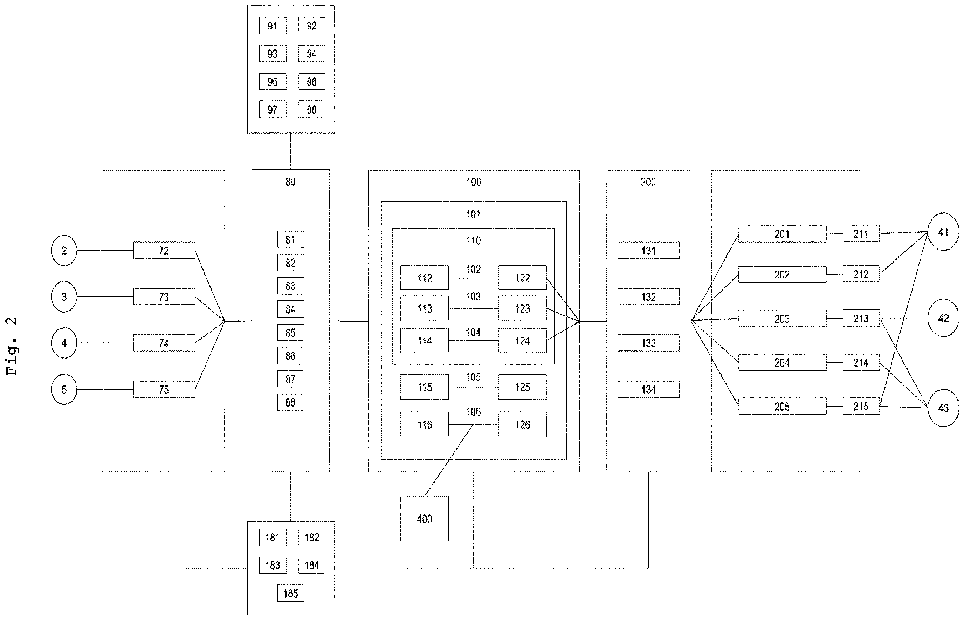

La figure 2 représente l'architecture fonctionnelle d'un exemple de réalisation du robot.

### Description des fonctions de perception

Les informations provenant des capteurs (2 à 5) fournissent des informations permettant de calculer par l'intermédiaire de fonctions de perception (72 à 75) des métadonnées numériques, image de la représentation sémantique que le robot se fait du monde.

Chacune de ces fonctions de perception (72 à 75) reçoit des données prétraitées d'un ou plusieurs capteurs (2 à 5) pour calculer les métadonnées correspondant à un type de perception.

Par exemple,
- une première fonction de perception (72) calcule une distance entre le robot et un objet détecté,
- une deuxième fonction de perception (73) réalise une reconnaissance d'image pour caractériser les objets détectés
- une troisième fonction de perception (74) réalise une reconnaissance vocale pour restituer une séquence de caractères correspondant à la phrase dite par un utilisateur

Ces métadonnées numériques sont constituées par des objets codés en langage objet, par exemple en C# ou C++. Ces métadonnées comprennent tout ou partie des éléments suivants :
- une description sémantique sous forme de séquence de caractères, par exemple « JE VOIS UN HOMME À 1 MÈTRE DE DISTANCE ET À 20 DEGRÉS SUR LA DROITE »
- un type, par exemple « HUMAIN »
- une position dans l'espace tridimensionnel, par exemple « X=354, Y = 153, Z = 983 »
- une rotation dans l'espace caractérisé par un quaternion, par exemple « Q=[X=0, Y = 0, Z = 0, W = 1]»
- des attributs spécifiques à l'objet, par exemple, pour un humain « ÂGE, SEXE, TAILLE, etc »

L'ensemble des objets codés correspondant aux fonctions de sélection est stocké dans une mémoire (80) dont le contenu exprime la représentation du monde telle que perçue par le robot.

### Description des fonctions de condensation

On applique à cet ensemble d'objets codés des traitements (91 à 98) en tâche de fond par des fonctions de condensation qui procèdent à l'extraction de données caractéristiques de chacun desdits objets et de regroupement d'objets codés partageant les mêmes données caractéristiques.

Par exemple, une première fonction de condensation réalise le traitement de reconnaissance de visage sur les objets détectés de type humain, à partir des objets suivants :
- Objet 1 : « JE VOIS UN HOMME À 1 MÈTRE DE DISTANCE ET À 20 DEGRÉS SUR LA DROITE », l'objet 1 comprenant également un fichier image correspondant
- Objet 2 : « J'AI RECONNU PAUL »
- Ce traitement modifie l'objet 1, qui devient « JE VOIS PAUL À 1 MÈTRE DE DISTANCE ET À 20 DEGRÉS SUR LA DROITE ».

Une deuxième fonction de condensation réalise le traitement d'association d'une personne avec un son reconnu, à partir des objets suivants :
- Objet 1 : « JE VOIS UN HOMME À 1 MÈTRE DE DISTANCE ET À 20 DEGRÉS SUR LA DROITE »
- Objet 3 : « J'AI RECONNU LA PHRASE 'BONJOUR' À 20 DEGRÉS SUR LA DROITE »
- Ce traitement modifie l'objet 1, qui devient « JE VOIS UN HOMME À 1 MÈTRE DE DISTANCE ET À 20 DEGRÉS SUR LA DROITE QUI ME DIT 'BONJOUR' ».

Une troisième fonction de condensation réalise le traitement d'association des deux objets, à partir des objets recalculés suivants :
« JE VOIS PAUL À 1 MÈTRE DE DISTANCE ET À 20 DEGRÉS SUR LA DROITE »
« JE VOIS UN HOMME À 1 MÈTRE DE DISTANCE ET À 20 DEGRÉS SUR LA DROITE QUI ME DIT 'BONJOUR' »
pour modifier l'objet 1 ainsi « JE VOIS PAUL À 1 MÈTRE DE DISTANCE ET À 20 DEGRÉS SUR LA DROITE QUI ME DIT 'BONJOUR' »

Les traitements de condensation (91 à 98) sont appliqués de manière récursive sur le contenu de la mémoire (80) contenant la représentation du monde par le robot.

### Description de la sélection des règles et des actions

Le système comporte par ailleurs un système de sélection d'action (« rule manager ») (100) qui comporte une mémoire déclarative (101) dans laquelle est enregistrée une bibliothèque de règles (102 à 106) associant un contexte (112 à 116) à une action (122 à 126).

Par exemple, une première règle R1 est constituée par une séquence numérique de type :
« SI TU ENTENDS UN HOMME TE DIRE BONJOUR, RÉPOND 'BONJOUR MONSIEUR' »
et une deuxième règle R2 est constituée par une séquence numérique de type :
« SI TU ENTENDS UN HUMAIN TE DIRE BONJOUR, ET QUE CET HUMAIN SE PRÉNOMME #PRÉNOM, RÉPOND 'BONJOUR #PRÉNOM' »
et une troisième règle R3 est constituée par une séquence numérique de type :
« SI TU ENTENDS UN BRUIT ET QU'IL EST ENTRE 2HOO DU MATIN ET 4H00 DU MATIN, ENVOIE À TON PROPRIÉTAIRE UNE PHOTO DE CE QUE TU VOIS».

Une action (122 à 126) se matérialise par une séquence numérique désignant un arbre de primitives (131 à 134) exécutés par les effecteurs du robot, tel que :
Action 1 « ENVOI UN MESSAGE À TON PROPRIÉTAIRE » correspond à une séquence unitaire constituée par une seule primitive (131 à 134):
   - émission d'un message.
Action 2 « SOURIS » correspond à une séquence composite comprenant plusieurs primitives (131 à 134):
   - Gestion de la forme de la bouche, avec les paramètres « fichier de déformation FD₂ » et « amplitude 0,2 »
   - Gestion de l'ouverture des yeux, avec le paramètre « ouverture 0,1 »
   - Emet un son caractéristique, avec les paramètres « fichier sonore S₇ », « durée 2s » et « intensité 0,2 »
Action 3 « EXPRIME LA TERREUR » correspond à une séquence composite comprenant plusieurs primitives (131 à 134):
   - agrandit la taille des yeux, avec les paramètres « fichier de déformation FD₂₁₃ » et « amplitude 0,5 »
   - déplace ton bras de manière oscillante, avec les paramètres « fichier de déplacement FD₁₂₃ » et « amplitude 0,5 »
   - émet un son caractéristique, avec les paramètres « fichier sonore S₁₂ », « durée 1s » et « intensité 10 ».
Action 4 « LÈVE LE BRAS » correspond à une séquence composite comprenant une seule primitive (131 à 134):
   - déplace ton bras jusqu'à la verticale avec les paramètres « fichier de déplacement FD₃₃ » et « amplitude 120».

Le système de sélection d'actions (100) classe les règles (102 à 105) en fonction de la proximité du contexte (112 à 115) de chacune de ces règles avec le contexte calculé à partir du contenu des objets (81 à 88) contenus dans la mémoire (80), par un calcul de distance dans l'espace à N dimensions du contexte.

Ce calcul fournit périodiquement un sous-ensemble (110) de règles (102 à 104) associées à des actions (122 à 124), sous forme d'une liste ordonnée par pertinence en fonction du calcul de distance précité. On filtre optionnellement la liste en fonction d'une valeur-seuil pour constituer un sous-ensemble de règles dont la distance avec le contexte courant est inférieure à cette valeur-seuil.

Ce sous-ensemble (110) est ensuite ordonné en fonction d'un Indicateur de Satisfaction (IS). A cet effet, chaque règle est affectée lors de son exécution à un paramètre numérique variable IS. Les modalités de détermination de ce paramètre numérique IS seront exposées ci-après.

Le sous-ensemble (110) ainsi déterminé définit un ensemble d'actions (122 à 124) ordonnées, associées auxdites règles (102 à 104) et utilisées pour commander le fonctionnement des effecteurs du robot.

### Description de l'exécution des actions

L'exécution des actions (122 à 124) est effectuée via l'activation de primitives (131 à 134) dont le paramétrage est déterminé par le contenu desdites actions (amplitude du déplacement, adresse de la séquence sonore, intensité de la séquence sonore,...).

Les primitives (131 à 134) désignent des méta-fonctions, se traduisant par un code informatique dont l'exécution est réalisée par un ensemble de commandes (201 à 205) transmises à des applications logicielles (211 à 215) ou directement à des effecteurs (41 à 43), optionnellement avec des paramètres, par exemple :
- Primitive P1 « émet un son caractéristique », avec les paramètres « fichier sonore S₁₂ », « durée 1 seconde » et « intensité 10 » » est associé aux commandes suivantes :
   ∘ Charger dans le pilote (61) le fichier sonore S12
   ∘ Ajuster le niveau de l'amplificateur à un niveau 10
   ∘ Lire le fichier sonore S₁₂ pendant une durée d'une seconde
   ∘ Effacer la mémoire du pilote (61).

Chaque primitive (131 à 134) est paramétrée, le cas échéant avec :
- des paramètres propres, transmis par l'action sous forme d'arguments
- de paramètres additionnels et contextuels déterminés en fonction du paramètre numérique IS provenant de l'action
- de paramètres additionnels VEIₓ qui seront explicités ci-après.

L'activation des primitives (131 à 134) est filtrée par un gestionnaire de ressources (200) dont le but est d'empêcher l'envoi de commandes contradictoires ou impossibles à effectuer, à un même effecteur (41). Ce filtrage favorise l'activation des primitives associées aux actions (122 à 124) ayant le paramètre IS le plus élevé.

Par exemple, si parmi la liste des actions sélectionnées (122 à 124), nous avons :
- une première action sélectionnée (122) conduisant à l'activation d'une primitive gérant le déplacement du bras du robot, avec un paramétrage impliquant un déplacement vers le haut
- une deuxième action sélectionnée (123) conduisant à l'activation de la même primitive gérant le déplacement du bras du robot, mais avec un paramétrage impliquant un déplacement vers le bas
alors les paramètres appliqués à cette même primitive gérant le déplacement du bras sont incompatibles, et le gestionnaire de ressources (200) inhibe l'action ayant le paramètre IS le plus faible, et la primitive paramétrée effectivement exécutée est celle résultant de l'action ayant le paramètre IS le plus élevé.

Selon un autre exemple, le gestionnaire de ressources (200) calcule une nouvelle primitive à partir de deux primitives jugées incompatibles, dont le paramétrage est calculé par pondération des paramétrages des deux primitives incompatibles en fonction du paramètre IS associé à chacune d'elles et correspond ainsi à un compromis.

### Apprentissage des règles

Selon un exemple de mise en oeuvre de l'invention, l'enregistrement des règles (102 à 106) est réalisé par un apprentissage vocal.

A cet effet, un module d'apprentissage (400) comprenant un module de reconnaissance vocale et d'analyse sémantique analyse les phrases prononcées par un opérateur, pour extraire des actions et des contextes définissant une nouvelle règle (106).

Par exemple, si l'humain prononce une phrase telle que « si tu entends un bruit fort, active un signal sonore », le module construit et enregistre une règle associant l'action « ACTIVER UN SIGNAL SONORE » au contexte « TU ENTENDS UN BRUIT DÉPASSANT UN NIVEAU X».

Selon un autre exemple, le module d'apprentissage (400) comprend aussi des moyens de reconnaissance cinétique, pour reconnaître un geste, par exemple la désignation d'un objet. Dans ce cas, le module d'apprentissage (400) comporte en outre un module d'analyse d'image, pour permettre un apprentissage par des gestes combiné à des paroles énoncées.

Par exemple, l'humain désigne un objet dans le champs de vision de la caméra du robot et prononce la phrase « SI TU VOIS CET #OBJET, SAISI LE », conduit à l'enregistrement de la règle constituée par l'action «SAISIR L'OBJET » associée au contexte « VOIR OBJET '#OBJET' ».

Selon un troisième exemple, le module d'apprentissage (400) comprend des moyens d'apprentissage par mimétisme ou par récurrence : lorsque le robot enregistre de manière répétée une même action associée à un même contexte, il déclenche l'enregistrement d'une nouvelle règle associant cette action à ce contexte.

Par exemple, lorsque l'humain répond systématiquement « de rien » à « Merci » énoncé par le robot, le robot crée la règle associant l'action « DIRE DE RIEN» au contexte « UN HUMAIN DIT `MERCI' ».

Les combinaisons d'actions et de contextes sont construites en fonction de la valeur du paramètre de complicité VEI₄ calculé pour chaque couple d'une action et d'un contexte, lors des interactions entre l'humain et le robot.

Bien entendu, les règles (102 à 106) peuvent aussi être enregistrées par programmation.

### Calcul du paramètre IS

Chaque règle (102 à 106) présente dans la mémoire déclarative (101) est associée à un paramètre IS (Indicateur de Satisfaction) qui est recalculé après chaque réalisation de l'action (112 à 116) associée, en fonction de la valeur courante du paramètre VEI₃.
- Si la valeur de VEI₃ est élevée, c'est-à-dire supérieure à une valeur de référence, alors le paramètre IS de la règle dont l'action a été exécutée est augmentée
- Si la valeur de VEI₃ est faible, c'est-à-dire inférieure à une valeur de référence, alors le paramètre IS de la règle dont l'action a été exécutée est réduite.

La valeur du paramètre IS est utilisée pour ordonner les actions (112 à 116) et favoriser l'accès aux ressources par le gestionnaire de ressources (200) aux actions associées au paramètre IS présentant la valeur la plus élevée.

### Mutualisation des connaissances

Dans les exemples susvisés, les règles (102 à 106) sont enregistrées dans la mémoire locale d'un robot.

Selon une variante, plusieurs robots partagent une mémoire commune pour l'enregistrement des règles des robots, chaque robot conservant son propre paramètre IS.

A titre d'exemple, la mémoire déclarative (101) du système de sélection d'actions (100) d'un robot est périodiquement synchronisée avec le contenu d'un serveur partagé entre une pluralité de robots, par l'intermédiaire du module de communication (36).

L'apprentissage d'une nouvelle règle (106) dans le système de sélection d'actions (100) d'un robot particulier vient enrichir le comportement des systèmes de sélection d'actions (100) de la pluralité de robots accédant au serveur, tout en conservant ses propres valeurs d'état interne VEI et son propre ordre de priorité des règles (102 à 106), en fonction de son propre indicateur IS.

### Description du calcul des paramètres VEIₓ

Les paramètres VEIₓ (Variables d'État Interne) sont des variables comprises entre 0 et 1 représentatives de l'état interne du robot :
VEI₁ est représentative de l'état d'éveil ou d'activation du robot.
   - La valeur 0 correspond à une inactivité du robot où le robot est quasiment immobile et silencieux, avec une apparence d'endormissement
   - La valeur 1 correspond à un état de surexcitation où les mouvements du robot présentent une amplitude maximale, avec une apparence de pupille dilatée pour les robots présentant un visage animé, mouvements fréquents et saccadés...
      ∘ La valeur du paramètre VEI₁ est par exemple calculé en fonction de l'évolution de l'environnement du robot : en cas de stabilité des informations perçues par les capteurs (2 à 5), et d'absence d'humain détecté par le robot, la valeur sera faible.
      ∘ en cas de modifications rapides de l'environnement détecté par les capteurs (2 à 5) ou en cas de détection de la présence d'un humain, la valeur du paramètre VE₁ sera augmentée.
VEI₂ est représentative de l'état de surprise du robot.
   - La valeur 0 correspond à une activité nominale du robot
   - La valeur 1 correspond à des variations ponctuelles et brusques des effecteurs (mouvements brusques des articulations, niveau sonore variant brusquement,...)
      ∘ Le paramètre VEI₂ est par exemple calculé en fonction des variations temporelles du paramètre VEI₁, par exemple par un calcul d'une dérivée de VEI₁
VEI₃ est représentative de l'état de satisfaction apparente du robot.
   - La valeur 0 correspond à une apparence physique déçue du robot (regard dirigé principalement vers le bas, bras dirigée vers le bas, ...)
   - La valeur 1 correspond à une apparence physique fière du robot (regard dirigé principalement vers le haut, position des articulations donnant une apparence fière,...)
      ∘ Le paramètre VEI₃ est par exemple calculé en fonction de certaines interactions entre l'humain et le robot, telles que :
         ▪ La détection d'une expression faciale telle que le sourire ou la colère
         ▪ La durée de certaines interactions
         ▪ L'accomplissement d'un processus interne du robot.
VEI₄ est représentative de l'état de complicité entre le robot et les humains avec lesquels il interagit.
   - La valeur 0 correspond à un faible niveau d'interaction et d'activation des effecteurs
   - La valeur 1 correspond à une forte activation des effecteurs et une tendance au mimétisme du robot avec l'humain avec lequel il interagit, et une tendance au déplacement du robot en direction de cet humain et d'orientation du regard du robot vers cet humain.

Ce paramètre peut être calculé grâce à des étapes de commande de fonctions codées de stimulations de l'utilisateur et d'acquisition de l'effet induit sur l'utilisateur, pour déduire le niveau d'empathie en fonction de la conformité entre le stimuli et l'image acquise.
- Le paramètre VEI₄ est par exemple calculé en fonction du niveau de mimétisme entre l'humain et le robot, c'est-à-dire le taux de mouvement de l'humain reproduisant les mouvements du robot avec un faible décalage temporel, ou réagissant de manière prévue au mouvement du robot, avec un faible décalage temporel, ou de certaines interactions entre l'humain et le robot, telles que :
   ∘ La détection d'un contact physique de l'humain avec le robot.

VEI₅ est représentative de l'état de joie du robot.
- La valeur 0 correspond à une apparence de tristesse (regard dirigé vers le bas, zone buccale tombante, prosodie neutre, articulations affaissées, ...
- La valeur 1 correspond à une forte activation des effecteurs et une tendance au sourire et à l'émission de sons appropriés.
   ∘ Le paramètre VE₅ est par exemple calculé en fonction de la détection du sourire sur le visage de l'humain et le résultat d'une combinaison des autres paramètres VEₓ.

De façon générale, les paramètres VEIₓ sont calculés par des modules (181 à 185) à partir des données fournies par le module (80) déterminant la représentation du monde par le robot en fonction des données acquises par l'ensemble des capteurs (2 à 5) et les informations représentatives de l'état du robot, pour la détermination des synchronismes entre le robot et l'humain.

Les paramètres VEI₁ à VEI₅ sont également calculés en fonction de critères internes, indépendant de l'environnement extérieur du robot. Ces critères prennent par exemple en compte :
- la durée de maintien d'un paramètre VEIₓ à un niveau constant, provoque une évolution vers une valeur de référence
- la fréquence des variations de la valeur VEIₓ pondère l'amplitude des variations
- la saturation de l'impact d'un facteur déclenchant influant un paramètre VEIₓ

Le résultat des traitements fournit des valeurs périodiquement mises à jour pour les paramètres VEIₓ, qui modulent les fonctions de perception (71 à 75) et les primitives (131 à 134), ainsi que le module de sélection de comportements (100) .

Par exemple :
- La vitesse d'un moteur est proportionnelle à la valeur du paramètre VEI₁
- Le fichier sonore S est sélectionné en fonction des valeurs des paramètres VEI₁ à VEI₅.

Les fonctions de calcul des paramètres VEIₓ peuvent être déterminées par une étape initiale de caractérisation consistant à enregistrer des données expérimentales obtenues par un processus consistant à soumettre des personnes à une pluralité de stimuli et à associer à chacun desdits stimuli correspondants auxdites fonctions de perception, un niveau de perception [plaisir, satisfaction, éveil, surprise, ...].

## Revendications

1. - Procédé de commande d'une pluralité d'effecteurs (41 à 43) d'un robot par une pluralité de primitives (131 à 134) constituées par des fonctions codées paramétrables
- lesdites primitives (131 à 134) étant activées conditionnellement par des actions (122 à 124) sélectionnées par un système de sélection d'actions (100) ∘
∘ ledit système de sélection d'actions (100) :
▪ comportant une mémoire déclarative (101) dans laquelle est enregistrée une bibliothèque dynamique de règles (102 à 106), chacune associant un contexte (112 à 116) à une action (122 à 126)
▪ reposant sur une liste d'objets codés (81 à 88) stockés dans une mémoire (80) déterminant la représentation du monde par ledit robot
∘ lesdits objets codés (81 à 88) stockés dans la mémoire (80) étant calculés par des fonctions de perception (72 à 75)
∘ lesdites fonctions de perception (72 à 75) étant calculées à partir des signaux fournis par des capteurs (2 à 5 ) dudit robot
**caractérisé en ce que** le procédé repose sur l'association, à chaque étape, des objets codés avec une séquence de caractères correspondant à leur description sémantique, comprenant :
I. une description sémantique desdits objets codés (81 à 88) stockés dans la mémoire (80), composée d'une chaîne de caractères représentant une fonction de perception du robot et d'une autre chaîne de caractères représentant un objet perçu
II. une description sémantique desdites primitives (131 à 134), composée d'une chaîne de caractères représentant une action possible du robot et d'une autre chaîne de caractères optionnelle représentant les paramètres optionnels de cette action
III. une description sémantique desdites règles (102 à 106), composée de la combinaison d'une chaîne de caractères représentant le contexte associé (112 à 116) et d'une autre chaîne de caractères représentant l'action associée (122 à 126).
le procédé comportant en outre des étapes d'enregistrement de nouvelles règles (106) associées à une nouvelle action (116), par l'intermédiaire d'un module d'apprentissage (400), par une application de reconnaissance vocale, de reconnaissance de gestes ou du mimétisme.

2. - Procédé de commande d'une pluralité d'effecteurs (41 à 43) d'un robot selon la revendication 1 **caractérisé en ce que** ledit système de sélection d'action (100) classifie les règles (102 à 106) en fonction de la proximité du contexte (112 à 116) de chacune de ces règles avec le contexte calculé à partir du contenu des objets (81 à 88) contenus dans la mémoire (80) et sélectionne les actions (122 à 124) associées aux règles pertinentes avec le contexte (102 à 104) .

3. - Procédé de commande d'une pluralité d'effecteurs (41 à 43) d'un robot selon la revendication 1 **caractérisé en ce qu'**il comporte une étape de calcul, pour chaque règle (102 à 106), d'un paramètre IS qui est recalculé après chaque réalisation de l'action (122 à 126) associée, l'ordre de priorité des actions (122 à 124) sélectionnées par le système de sélection d'action (100) étant déterminé en fonction de la valeur du paramètre IS associé à chacune des actions .

4. - Procédé de commande d'une pluralité d'effecteurs (41 à 43) d'un robot selon la revendication 1 **caractérisé en ce qu'**il comporte en outre des étapes de communication avec d'autres robot par l'intermédiaire d'un module de communication (36) et d'un serveur partagé, la mémoire déclarative (101) du système de sélection d'actions (100) du robot étant périodiquement synchronisée avec le contenu dudit serveur partagé.

5. - Procédé de commande d'une pluralité d'effecteurs (41 à 43) d'un robot selon la revendication 1 **caractérisé en ce que** l'activation des primitives (131 à 134) par les actions (122 à 124) est filtrée par un gestionnaire de ressources (200) assurant la compatibilité des commandes envoyées aux effecteurs (41 à 43).

6. - Procédé de commande d'une pluralité d'effecteurs (41 à 43) d'un robot selon la revendication 1 **caractérisé en ce qu'**il comporte en outre : i. des étapes de mise à jour constante, en tâche de fond de variables d'état interne VEIx, en fonction de l'évolution des objets enregistrés dans ladite mémoire (80). ii. des étapes de paramétrage desdites primitives d'action (131 à 134), desdites fonctions de perception (72 à 75) et dudit module de sélection d'actions (100) en fonction des valeurs desdites variables d'état interne VEIx.

7. - Robot comportant une pluralité d'effecteurs commandé par un contrôleur exécutant un procédé conforme à l'une au moins des revendications précédentes.
